Europäisches Patentamt

European Patent Office

Office européen des brevets

(11) Veröffentlichungsnummer: **0 342 273 B1**

## (12) EUROPÄISCHE PATENTSCHRIFT

(45) Veröffentlichungstag der Patentschrift: **30.09.92**

(21) Anmeldenummer: **88121058.7**

(22) Anmeldetag: **16.12.88**

(51) Int. Cl.⁵: **H04L 5/14**, H04L 12/28

### (54) Busabschluss.

(30) Priorität: **16.05.88 CH 1831/88**

(43) Veröffentlichungstag der Anmeldung:
**23.11.89 Patentblatt 89/47**

(45) Bekanntmachung des Hinweises auf die
Patenterteilung:
**30.09.92 Patentblatt 92/40**

(84) Benannte Vertragsstaaten:
**CH DE FR GB LI**

(56) Entgegenhaltungen:
**EP-A- 0 293 197**
**FR-A- 2 554 295**
**US-A- 4 075 606**

(73) Patentinhaber: **Landis & Gyr Betriebs AG**

**CH-6301 Zug(CH)**

(72) Erfinder: **Reber, Jürg**
**Langrütiweg 12**
**CH-6330 Cham(CH)**

(74) Vertreter: **Müller, Hans-Jürgen, Dipl.-Ing.**
**Müller, Schupfner & Gauger Maximilianstrasse 6 Postfach 10 11 61**
**W-8000 München 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Busabschluß gemäß dem Oberbegriff des Anspruchs 1.

Solche Busabschlüsse werden vorteilhaft in Datenübertragungseinrichtungen verwendet, bei denen mindestens zwei Daten-Sender und mindestens ein Daten-Empfänger über einen als Bus bezeichneten Datenübertragungskanal miteinander verbunden sind. In den meisten Fällen sind in einer solchen Datenübertragungseinrichtung mehrere Sender und mehrere Empfänger an den einen Bus angeschlossen.

Zum Zwecke der Datenübertragung sind mehrere Bus-Varianten von verschiedenen Gremien genormt worden. Ein solcher Bus ist der nach dem EIA-Standard RS-485, der von der Electronic Industries Association verfaßt wurde. Dieser Standard sieht vor, den Bus an seinen Enden mittels Widerständen abzuschließen. Im Anhang zu diesem Standard ist erwähnt, daß in dem Fall, da alle an den Bus angeschlossenen Sender passiv sind, der Zustand des Busses undefiniert ist. Dem Anwender wird empfohlen, die sich daraus ergebenden Probleme zum Beispiel durch besondere Maßnahmen hinsichtlich des anzuwendenden Datenverkehrs-Protokolls zu lösen.

Aus der Zeitschrift "Elektronik", Nr. 19 (1986), S. 148, ist es bekannt, den Busabschlußwiderstand dadurch zu polarisieren, daß die eine Busleitung über einen Widerstand mit der positiven Versorgungsspannung des am Ende des Busses vorhandenen Busteilnehmers verbunden wird und die andere Busleitung über einen Widerstand mit dem Bezugspotential dieses Busteilnehmers verbunden wird. Die Busleitungen haben dadurch auch dann einen definierten Zustand, wenn kein Sender am Bus aktiv ist. Diese Maßnahme ist jedoch wirkungslos, wenn der den Busabschluß speisende Busteilnehmer nicht eingeschaltet ist und somit die den Busabschlußwiderstand polarisierende Versorgungsspannung nicht abgeben kann.

Der Erfindung liegt die Aufgabe zugrunde, einen Busabschluß zu schaffen, durch den das Auftreten eines undefinierten Bus-Zustands bei kurzzeitiger Inaktivität aller am Bus angeschlossenen Sender verhindert wird, ohne daß es einer Speisung des Busabschlusses durch die Versorgungsspannung eines Busteilnehmers bedarf.

Die genannte Aufgabe wird erfindungsgemäß durch die Merkmale des Anspruchs 1 gelöst. Vorteilhafte Ausgestaltungen ergeben sich aus den Unteransprüchen.

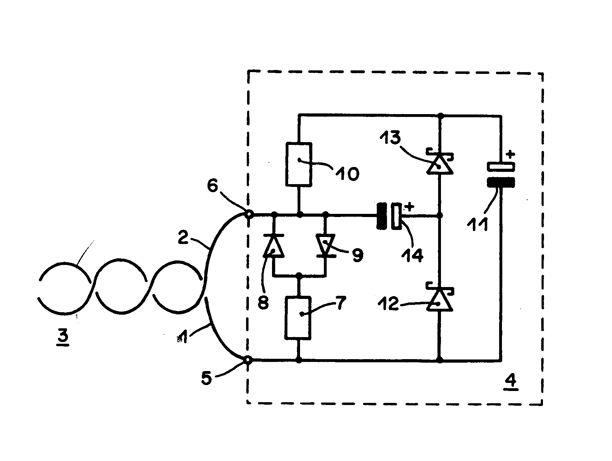

Nachfolgend wird ein Ausführungsbeispiel der Erfindung anhand der Zeichnung näher erläutert.

Die einzige Figur zeigt ein Schaltbild eines Busabschlusses.

In der Figur bedeutet 1 eine erste Busleitung und 2 eine zweite Busleitung. Die Busleitungen 1 und 2 bilden zusammen einen Bus 3. Mit 4 ist ein Busabschluß bezeichnet, der einen ersten Anschlußpunkt 5 und einen zweiten Anschlußpunkt 6 aufweist. An die Anschlußpunkt 5 und 6 ist der Bus 3 angeschlossen, wobei es gleichgültig ist, ob die erste Busleitung 1 an den ersten Anschlußpunkt 5 oder an den zweiten Anschlußpunkt 6 und die zweite Busleitung 2 an den zweiten Anschlußpunkt 6 oder an den ersten Anschlußpunkt 5 angeschlossen ist.

Nachfolgend wird der Aufbau des Busabschlusses 4 beschrieben. Zwischen dem ersten Anschlußpunkt 5 und dem zweiten Anschlußpunkt 6 ist eine Reihenschaltung eines Busabschlußwiderstandes 7 mit einer Antiparallelschaltung einer ersten Diode 8 und einer zweiten Diode 9 angeschlossen. Parallel dazu liegt eine Reihenschaltung eines Begrenzungswiderstandes 10 mit einem ersten Kondensator 11, wobei der negative Anschluß des Kondensators 11 am ersten Anschlußpunkt 5 liegt. Parallel zum Kondensator 11 ist eine Reihenschaltung eines ersten Gleichrichters 12 und eines zweiten Gleichrichters 13 geschaltet. Diese beiden Gleichrichter liegen gleichsinnig so hintereinander, daß der Anodenanschluß des ersten Gleichrichters 12 am ersten Anschlußpunkt 5 liegt.

Zwischen dem gemeinsamen Punkt des ersten Gleichrichters 12 und des zweiten Gleichrichters 13 und dem zweiten Anschlußpunkt 6 ist ein zweiter Kondensator 14 so geschaltet, daß dessen negativer Anschluß am zweiten Anschlußpunkt 6 liegt.

Nachfolgend wird die Funktionsweise des Busabschlusses 4 beschrieben. Ist ein Sender am Bus 3 aktiv, so befinden sich die Busleitungen 1 und 2 in definiertem Zustand, wobei zwei verschiedene Zustände möglich sind. Im einen Zustand weist die Busleitung 1 ein gegenüber der Busleitung 2 höheres Potential des Betrages $U_E$ auf. Im anderen Zustand weist die Busleitung 2 ein gegenüber der Busleitung 1 höheres Porential des gleichen Betrages $U_E$ auf. Der erstgenannte Zustand entspricht dem Logiksignal "1", der zweitgenannte Zustand dem Logiksignal "0".

In beiden Fällen fließt über den Busabschlußwiderstand 7 ein Strom. Hat die Busleitung 1 höheres Potential als die Busleitung 2, dann fließt der Strom vom Anschlußpunkt 5 über den Busabschlußwiderstand 7 und die Diode 8 zum Anschlußpunkt 6. Hat dagegen die Busleitung 2 höheres Potential als die Busleitung 1, so fließt der Strom vom Anschlußpunkt 6 über die Diode 9 und den Busabschlußwiderstand 7 zum Anschlußpunkt 5.

Hat die Busleitung 1 höheres Potential als die Busleitung 2, so fließt außerdem ein Strom über den Gleichrichter 12 und lädt den Kondensator 14 auf. Hat dagegen die Busleitung 2 höheres Potential als die Busleitung 1, so wird über den Gleichrichter 13 der Kondensator 11 aufgeladen. Die Schaltung der Gleichrichter 12 und 13 mit den Kondensatoren 11 und 14 entspricht der bekannten Kaskadenschaltung, auch Villard-Schaltung genannt.

Mit Hilfe dieser Schaltung wird aus der an den Anschlußpunkten 5 und 6 anliegenden rechteckförmigen Wechselspannung eine über dem Kondensator 11 wirksame Gleichspannung gewonnen und gespeichert, die über den Begrenzungswiderstand 10 auf den Bus 3 wirkt.

Statt der aus den Gleichrichtern 12 und 13 und den Kondensatoren 11 und 14 bestehenden Kaskadenschaltung kann auch eine andere Gleichrichterschaltung vorgesehen werden, jedoch hat die Kaskadenschaltung den Vorteil, daß sie spannungsverdoppelnd wirkt und somit eine größere Energiemenge speichert als eine einfache Gleichrichterschaltung. Zudem ist sie einfach aufgebaut und damit preiswert.

Ist am Bus 3 kein Sender aktiv, so werden die Busleitungen 1 und 2 nicht mehr durch den Sender in ihrem Potential festgelegt. Ohne den Busabschluß 4, aber mit dem im EIA-Standard RS-485 vorgesehenen passiven Abschluß mittels eines Widerstands, nehmen die Busleitungen 1 und 2 den undefinierten, zwischen den Logiksignalen "0" und "1" liegenden Zustand mit $U_E = 0$ Volt ein. Zum Beispiel induktiv eingestreute Störungen könnten dann aber auf die Busleitungen 1 und 2 einwirken und am Bus 3 angeschlossene Empfänger hin- und herschalten.

Dieses Verhalten ist aber bei Vorhandensein des Busabschlusses 4 nicht möglich. Die Ladung des Kondensators 11 bewirkt, daß ein Strom über den Begrenzungswiderstand 10, die Diode 9 und den Busabschlußwiderstand 7 fließt. Dadurch wird zwangsläufig dem Anschlußpunkt 6 und somit der Busleitung 2 ein gegenüber dem Anschlußpunkt 5 und der Busleitung 1 positives Potential aufgezwungen, so daß sich der Bus 3 in einem definierten Zustand befindet.

Durch den Stromfluß vom Kondensator 11 über den Begrenzungswiderstand 10, die Diode 9 und den Busabschlußwiderstand 7 wird dessen Ladung und somit dessen Spannung vermindert. Dauert der Zustand, daß am Bus 3 kein Sender aktiv ist, an, so wird die Entladung fortgesetzt. Unterschreitet die Spannung über dem Kondensator 11 einen von der Größe der Widerstände 7 und 10 und der Flußspannung der Diode 9 abhängigen Wert, so wird der Busabschlußwiderstand 7 durch die Diode 9 abgeschaltet. Damit wird in vorteilhafter Weise die Geschwindigkeit der Entladung des Kondensators 11 verringert. Trotzdem verbleibt die Busleitung 2 auf einem gegenüber der Busleitung 1 höheren Potential, weil weiterhin ein Strom vom Kondensator 11 über den Begrenzungswiderstand 10 fließt, dessen Größe nun von der Summe der Innenwiderstände der an den Bus 3 angeschlossenen Sender und Empfänger abhängt.

Zum Abschalten des Busabschlußwiderstandes 7 könnte statt der Diode 9 auch ein Schalttransistor verwendet werden. Um die Symmetrie an Wechselspannung zu erreichen, wird vorteilhafterweise anstelle der Diode 8 gleichfalls ein Schalttransistor verwendet. Jeder der beiden Schalttransistoren wirkt für eine Stromflußrichtung.

Die Verwendung von Schalttransistoren bedingt zusätzliche Widerstände zur Festlegung des geeigneten Schaltpunktes, hat aber den Vorteil, daß eine exakte Schaltschwelle erreichbar ist. Die Abschaltung des Busabschlußwiderstands 7 mittels der Diode 9 hat den Vorteil, daß sie besonders einfach aufgebaut ist.

Würde der Zustand, daß kein Sender am Bus 3 aktiv ist, unendlich lange andauern, so würde sich der Kondensator 11 vollständig entladen und somit wäre der Busabschluß 4 nicht mehr in der Lage, dem Bus 3 einen definierten Zustand aufzuzwingen. Bei Anwendung solcher Datenverkehrs-Protokolle, bei denen sichergestellt ist, daß auf dem Bus 3 so regelmäßig Datenverkehr abgewickelt wird, daß die Zeitspannen, in denen keiner der am Bus 3 angeschlossenen Sender aktiv ist, zwangsläufig begrenzt sind, ist das vollständige Entladen des Kondensators 11 ausgeschlossen. Ein Beispiel für ein solches Protokoll ist das Token-Passing-Protokoll, bei dem von Sender zu Sender ein Token übermittelt wird, wobei nur jener Sender sendeberechtigt ist, der das Token besitzt. In einem solchen Fall hat der Bus 3 in den Pausen, d. h. während der Zeitspannen, in denen keiner der am Bus 3 angeschlossenen Sender aktiv ist, einen eindeutigen Zustand. Die Dimensionierung der Bauelemente, insbesondere die der Kondensatoren, richtet sich nach der beim jeweils angewendeten Datenverkehrs-Protokoll möglichen maximalen Länge der Zeitspannen, in denen kein am Bus 3 angeschlossener Sender aktiv ist.

Vorteilhaft werden als Gleichrichter 12 und 13 Schottky-Dioden verwendet, weil diese eine niedrige Vorwärtsspannung aufweisen. Gegenüber normalen Gleichrichter-Dioden mit höherer Vorwärtsspannung läßt sich ein größerer Teil der Ladung der Kondensatoren zur Polarisation des Busabschlußwiderstandes 7 ausnützen.

**Patentansprüche**

1. Busabschluß (4) für eine aus zwei Busleitungen (1, 2) bestehenden Bus (3) für Datenübertragungseinrichtungen unter Verwendung eines Datenverkehrs-Protokolls, bei dem sichergestellt ist, daß auf dem Bus (3) so regelmäßig Datenverkehr abgewickelt wird, daß die Zeitspannen, in denen keiner der am Bus (3) angeschlossenen Sender aktiv ist, zwangsläufig begrenzt sind, bei dem der Bus (3) an seinen Enden durch einen zwischen die Busleitungen (1, 2) geschalteten Busabschlußwiderstand (7) abgeschlossen ist,

dadurch gekennzeichnet, daß der Busabschluß (4) Mittel (11, 12, 13, 14) enthält, durch die aus der wechselnden Spannungsdifferenz zwischen den beiden Busleitungen (1, 2) eine Gleichspannung erzeugt und gespeichert wird, die dazu dient, während der Zeitspannen, in denen keiner der am Bus (3) angeschlossenen Sender aktiv ist, den Bus (3) in einem definierten Zustand zu halten.

2. Busabschluß (4) nach Anspruch 1, dadurch gekennzeichnet, daß Mittel (8, 9) vorhanden sind, durch die der Busabschlußwiderstand (7) abschaltbar ist.

3. Busabschluß (4) nach Anspruch 2, dadurch gekennzeichnet, daß der Busabschlußwiderstand (7) mit einer Antiparallelschaltung einer ersten Diode (8) und einer zweiten Diode (9) in Reihe geschaltet ist.

4. Busabschluß (4) nach Anspruch 2, dadurch gekennzeichnet, daß der Busabschlußwiderstand (7) mit einer Parallelschaltung von zwei je für eine Stromflußrichtung wirkenden Schalttransistoren in Reihe geschaltet ist.

5. Busabschluß (4) nach einem der Ansprüche 1 bis 4, dadurch gekennzeichnet, daß die Mittel zur Gewinnung einer Gleichspannung aus einem ersten Gleichrichter (12), einem zweiten Gleichrichter (13), einem ersten Kondensator (11) und einem zweiten Kondensator (14) bestehen, die als spannungsverdoppelnde Kaskadenschaltung angeordnet sind.

6. Busabschluß (4) nach Anspruch 3, dadurch gekennzeichnet, daß der erste Gleichrichter (12) und der zweite Gleichrichter (13) eine niedrige Vorwärtsspannung aufweisende Schottky-Dioden sind.

## Claims

1. A bus termination (4) for a bus (3) comprising two bus lines (1, 2) for data transmission apparatuses using a data communication protocol, in which it is ensured that data communication is so regularly developed on the bus (3) that the time intervals in which none of the transmitters connected to the bus (3) is active are inevitably limited, and in which the bus (3) is terminated at its ends by a bus termination resistor (7) connected between the bus lines (1, 2), characterised in that the bus termination (4) includes means (11, 12, 13, 14) by which a dc voltage is produced from the varying voltage difference between the two bus lines (1, 2) and stored, which dc voltage serves to hold the bus (3) in a defined condition during the time intervals in which none of the transmitters connected to the bus (3) is active.

2. A bus termination (4) according to claim 1 characterised in that there are means (8, 9) by which the bus termination resistor (7) can be switched off.

3. A bus termination (4) according to claim 2 characterised in that the bus termination resistor (7) is connected in series with an antiparallel circuit of a first diode (8) and a second diode (9).

4. A bus termination (4) according to claim 2 characterised in that the bus termination resistor (7) is connected in series with a parallel circuit of two switching transistors which are each operative for a respective current flow direction.

5. A bus termination (4) according to one of claims 1 to 4 characterised in that the means for obtaining a dc voltage comprise a first rectifier (12), a second rectifier (13), a first capacitor (11) and a second capacitor (14) which are arranged as a voltage-doubling cascade circuit.

6. A bus termination (4) according to claim 3 characterised in that the first rectifier (12) and the second rectifier (13) are Schottky diodes having a flow forward voltage.

## Revendications

1. Terminaison (4) destinée à un bus (3) se composant de deux conducteurs (1, 2) pour dispositifs de transmission de données à l'aide d'un protocole de circulation des données suivant lequel il est garanti que la circulation des données se déroule sur le bus (3) avec une régularité suffisante pour que les périodes au cours desquelles aucun émetteur connecté au bus (3) n'est actif soient impérativement limitées, une résistance (7) formant la terminaison des extrémités du bus (3) étant montée entre les conducteurs (1, 2), caractérisée en ce que la terminaison (4) du bus comprend des moyens (11, 12, 13, 14) qui produisent et accumulent, à l'aide de la différence de tension alternative entre les deux conducteurs (1, 2), une tension continue qui est destinée à maintenir le bus (3) à un état défini pendant les périodes au cours desquelles aucun des émetteurs connectés au bus (3) n'est actif.

2. Terminaison (4) de bus selon la revendication 1, caractérisée en ce qu elle comprend des moyens (8, 9) qui permettent de mettre hors circuit la résistance (7) de terminaison du bus.

3. Terminaison (4) de bus selon la revendication 2, caractérisée en ce que la résistance (7) de terminaison du bus est montée en série avec un montage en antiparallèle d'une première diode (8) et d'une seconde diode (9).

4. Terminaison (4) de bus selon la revendication 2, caractérisée en ce que la résistance (7) de terminaison du bus est montée en série avec un montage en parallèle de deux transistors de commutation dont chacun est actif pour un sens de circulation du courant.

5. Terminaison (4) de bus selon l'une des revendication 1 à 4, caractérisée en ce que les moyens d'obtention d'une tension continue se composent d'un premier redresseur (12), d'un second redresseur (13), d'un premier condensateur (11) et d'un second condensateur (14) qui sont disposés en un montage en cascade doubleur de tension.

6. Terminaison (4) de bus selon la revendication 3, caractérisée en ce que le premier redresseur (12) et le second redresseur (13) sont des diodes de Schottky dont la tension directe est basse.